(19) Europäisches Patentamt European Patent Office Office européen des brevets

(11) **EP 3 467 486 A1**

(12) **EUROPEAN PATENT APPLICATION**
published in accordance with Art. 153(4) EPC

(43) Veröffentlichungstag:
**10.04.2019 Patentblatt 2019/15**

(51) Int Cl.:
**G01N 23/223** (2006.01)

(21) Anmeldenummer: **17810630.8**

(22) Anmeldetag: **02.06.2017**

(86) Internationale Anmeldenummer:
**PCT/RU2017/000384**

(87) Internationale Veröffentlichungsnummer:
**WO 2017/213555 (14.12.2017 Gazette 2017/50)**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD**

(30) Priorität: **06.06.2016 RU 2016122265**

(71) Anmelder: **Obshchestvo S Ogranichennoy Otvetstvennostyu "Submicrovolnovaya Diagnosticheskaya Apparatura" Ekaterinburg 620075 (RU)**

(72) Erfinder:
• **GRIN, Mark Yakovlevich Ekaterinburg 620075 (RU)**

• **DVORTSOV, Mihail Alekseevich Sverdlovskaya oblast 624030 (RU)**
• **KORZHENEVSKIY, Sergey Romanovich Ekaterinburg 620147 (RU)**
• **KORZHENEVSKIY, Nikolay Sergeevich Ekaterinburg 620147 (RU)**
• **KOMARSKIY, Aleksandr Aleksandrovich Ekaterinburg 620016 (RU)**
• **SOLODOV, Dmitriy Leonidovich Desnogorsk Smolenskaya obl. 216400 (RU)**
• **CHEPUSOV, Aleksandr Sergeevich Ekaterinburg 620050 (RU)**
• **TITOV, Vladimir Nikolaevich Ekaterinburg 620017 (RU)**

(74) Vertreter: **Sloboshanin, Sergej et al V. Füner Ebbinghaus Finck Hano Patentanwälte Mariahilfplatz 3 81541 München (DE)**

(54) **VORRICHTUNG UND VERFAHREN ZUR BESTRAHLUNG VON RÖNTGENPHOSPHOREN VON RÖNTGENBILDGEBUNGSVORRICHTUNGEN**

(57) Verwendung: zum Erhalt von Röntgenbildern. Der Kern der Erfindung besteht darin, dass eine Bestrahlung der Röntgenleuchtstoffe von Röntgenbilderzeugungsvorrichtungen mit einem Paket von Röntgenstrahlungsimpulsen von Nanosekundendauer durchgeführt wird, wobei die Erzeugung des Bildes durch die Röntgenbilderzeugungsvorrichtung durch Aufzeichnung sowohl der durch den Röntgenleuchtstoff umgewandelten Röntgenstrahlung unmittelbar während der Wirkung der Röntgenstrahlung als auch der Lichtsumme der durch den Röntgenleuchtstoff umgewandelten Röntgenstrahlung in den Pausen zwischen den Röntgenstrahlungsimpulsen durchgeführt wird. Zur Erzeugung der Röntgenstrahlung werden Hochspannungsimpulse von Nanosekundendauer mit einer Spitzenleistung von mehr als 30 MW in einem Elektronenbündel mit positiver Polarität und einer Impulsfolgefrequenz bis 15 kHz verwendet, wobei die Impulsfolgefrequenz unter Berücksichtigung der Dauer des Abklingens des verwendeten Röntgenleuchtstoffs bestimmt wird. Die Dauer der Pause zwischen den Impulsen wird so gewählt, dass sie nicht länger als die Dauer der Verringerung der Intensität des Nachleuchtens des Röntgenleuchtstoffs bis zu einem Niveau von nicht weniger als 0,1 der Leuchtintensität in dem Moment, wenn die Anregung der Lumineszenz aufhört, ist. Ermöglicht werden der Erhalt eines qualitativ hochwertigen Röntgenbildes unter Beibehaltung des vorherbestimmten Signal/Rausch-Verhältnisses und eine Verringerung der Röntgenstrahlungsdosis.

EP 3 467 486 A1

Fig. 1

## Beschreibung

Gebiet der Technik

Die Erfindung betrifft Verfahren und Vorrichtungen zum Erzielen von Röntgenbildern und Röntgengeräte, und insbesondere röntgenoskopische und röntgenografische Geräte zur medizinischen und industriellen Anwendung, insbesondere röntgendiagnostische Vorrichtungen zur medizinischen Untersuchung und Introskopie.

Stand der Technik

Gegenwärtig werden in der Röntgen-Introskopie Röntgenbilderzeugungsvorrichtungen verschiedener Arten verwendet, die sich voneinander durch die Grundsätze der Energieumwandlung der Röntgenphotonen unterscheiden, die auf den Detektor einfallen. Bei Fällen, in denen eine Begrenzung der Strahlendosis wichtiger ist als der Verlust kleiner Details in der Abbildung, umfassen die Röntgenbilderzeugungsvorrichtungen verstärkende Röntgenleuchtstoffschirme (-schichten). Beispiele für solche Vorrichtungen sind röntgenografische Kassetten mit verstärkenden Röntgenleuchtstoffschirmen; Röntgenbildverstärker mit einem elektrooptischen Röntgen-Wandler, auf dessen Eingangsfenster ein Röntgenleuchtstoffschirm angebracht ist; Röntgenleuchtstoffschirm-CCD-Matrix-Systeme (Lineale) sowie digitale Systeme, die Fotodioden-Matrizen aus amorphem Silizium verwenden, die in optischem Kontakt mit dem Röntgenleuchtstoffschirm stehen.

Es ist bekannt, dass die Röntgenlumineszenz der meisten Materialien aus zwei Komponenten besteht: einer schnellen (im zweistelligen Nanosekundenbereich) und einer langsamen (im zwei- bis dreistelligen Mikrosekundenbereich). Dabei wird bei der Herstellung von Szintillationsdosimetern die schnelle Komponente genutzt, während bei der Herstellung von Röntgenbilderzeugungsvorrichtungen die langsame genutzt wird, die ungefähr 80% der Strahlungsenergie trägt.

Es sind ein Verfahren und ein diagnostisches Röntgengerät bekannt, das den Erhalt eines Röntgenbilds durch Bestrahlung mit einem Paket starker Impulse einer Röntgenstrahlung für eine Dauer von Nanosekunden realisiert (Patent der Russischen Föderation 2153848, A61B6/00, H05G1/20, veröffentlicht 10. August 2000), ein hinter dem zu untersuchenden Objekt stehender Wandler, der Röntgenstrahlung in sichtbare umwandelt. Die Aufnahme der erhaltenen Abbildung wird durch eine Videokamera durchgeführt, die synchron zu dem Moment des Eintreffens des Pakets der Röntgenstrahlungsimpulse gesteuert wird. Die Zahl der Impulse in dem Paket wird nach dem Verhältnis

$$1 \cong N \cong \frac{t}{T_1}$$ bestimmt, wobei N die Zahl der Röntgenstrahlungsimpulse in dem Paket ist; t die Zeit des Rückwegs eines Strahls der Bildabtastung der Videokamera ist; $T_1$ der Zeitraum der Impulsfolge der Röntgenstrahlung in dem Paket ist. Die Bestrahlung des Objekts erfolgt synchron mit der Bildabtastung der Videokamera während des Rückwegs des Strahls der Videokamera. Da die Gewöhnung des menschlichen Auges an die Abbildung in einer Zeit von ~0,2 s geschieht, wird eine Frequenz der Änderung der Abbildung von nicht mehr als 5 Hz verwendet, was zehnmal geringer als die Frequenz der Bildabtastung der Videokamera ist.

Der Nachteil dieses Verfahrens liegt darin, dass es nur mit Röntgenbilderzeugungsvorrichtungen verwendet werden kann, die eine Videokamera (CCD-Matrix) nutzen. Dabei zeichnet die Videokamera nicht nur das nutzbare Signal, sondern auch Strahlungs- und Eigenrauschen auf. Das verschlechtert seinerseits das Signal-RauschVerhältnis stark. Die Dauer der Strahlungsakkumulation ist durch die Dauer des Bilds der verwendeten Videovorrichtung begrenzt, was die Anwendung des Verfahrens zur Durchleuchtung von Objekten mit hoher Strahlungsdichte einschränkt.

Es ist ein Verfahren zur Impuls-Mikrodosen-Röntgendiagnostik bekannt (Patent der Russischen Föderation 2273844, G01N 23/04, veröffentlicht 10. April 2006), das die Durchleuchtung eines Objekts mit Impuls-Röntgenstrahlung, die Umwandlung der Strahlung, die das Objekt durchlaufen hat, mit einem Röntgenlumineszenz-Wandler, die Aufzeichnung der optischen Abbildung mit einer fotoelektronischen Vorrichtung, die zeitlich mit der Röntgenquelle synchronisiert ist, die Umwandlung von Signalen aus der analogen Form in eine digitale Form sowie die Speicherung, Verarbeitung und Übersetzung der Abbildung umfasst und sich dadurch auszeichnet, dass die Durchleuchtung des Objekts und die Aufzeichnung seiner optischen Abbildung in einem Zeitintervall zwischen kosmischen Strahlungsimpulsen erfolgt.

Der Nachteil dieses Verfahrens liegt in der zwingenden Verwendung fotoelektronischer Vorrichtungen (CCD-Matrizen, Bildwandler, fotoelektrische Vervielfacher) und der Nichtverwendbarkeit von Filmaufzeichnungssystemen.

Es ist ein Verfahren zum Erlangen eines Röntgenbilds bekannt (Patent der Russischen Föderation 2206886, G01N 23/04, veröffentlicht 20. Juni 2003), das sich dadurch auszeichnet, dass die Zeit der Bestrahlung und der Aufzeichnung der optischen Abbildung kleiner oder gleich der Strahlungszeit des RöntgenlumineszenzWandlers ist, während der Beginn der Exposition der fotoelektronischen Vorrichtung entsprechend der Zeit in dem Intervall des Strahlungsimpulses des Röntgenlumineszenz-Wandlers synchronisiert wird. Für die Aufzeichnung der optischen Abbildung wird ein impulsbasiertes, fotoelektronisches analog-digitales ladungsgekoppeltes Matrixgerät (eine CCD-Matrix) verwendet, dessen Expositionszeit gleich oder kleiner der Strahlungszeit des Röntgenlumineszenzwandlers ist.

Der Nachteil dieses Verfahrens besteht in der Nichtverwendbarkeit von Filmaufzeichnungssystemen, der niedrigen Auflösungsfähigkeit und dem geringen Dynamikbereich der Aufzeichnung der Abbildungen.

Es ist ein Verfahren zur Bestrahlung von Röntgenbilderzeugungsvorrichtungen mit Röntgenstrahlung mit Hilfe von Röntgengeräten bekannt, die eine Röntgenröhre mit einer Thermoemissionskathode nutzen (*Rentgenotekhnika: Spravochnik.* In 2 Bänden/Redaktion: V.V. Klyueva. Moskau, *Mashinostroenie,* 1980).

Ein Nachteil dieses Verfahrens ist die kontinuierliche Erzeugung von Röntgenstrahlung, wobei die Spitzenleistung der Röhre 0,1 MW nicht überschreitet und die Dauer der Exposition nicht weniger als 1 ms ist. In diesem Fall ist die Leuchtintensität des Leuchtstoffs linear proportional zu der Intensität der Röntgenstrahlung (O. N. Kazankin, L. Ya. Markovskiy, I. A. Mironov, F. M. Pekerman, L. N. Petroshina, Neorganicheskiye lyuminofory, Chimiya-Verlag, 1975). Gleichzeitig ist bekannt, dass die Bestrahlung von Leuchtstoffen mit starken Nanosekunden-Impulsen mit einer Energie der Elektronen bis zu 200 keV und einer Stromdichte von 100-1000 A/cm$^2$ eine Lumineszenz hervorruft, deren Spitzenintensität um 4 bis 6 Größenordnungen höher ist als die Intensität herkömmlicher stationärer Lumineszenz (V. I. Solomonov, Impul'snaya katodolyuminestsentsiya kondensirovannykh sred: Dissertation zur Erlangung des Doktorgrads in Physik und Mathematik, Ekaterinburg, Institut für Elektrophysik, Abteilung Ural der Russischen Akademie der Wissenschaften, 1996, 267 S.) Auf diese Weise wird die Möglichkeit der nichtlinearen Erhöhung der Spitzenintensität des Leuchtens des Leuchtstoffs nicht genutzt, aufgrund der Erhöhung der Spitzenstärke der Röntgenstrahlung, durch Verwendung von Starkstromimpulsen von Nanosekundendauer.

Der zu dem erfindungsgemäßen Verfahren nächstgelegene Stand der Technik ist ein Verfahren zur Bestrahlung von Röntgenleuchtstoffen mit einem Paket von Impulsen von Nanosekundendauer mit einer Impulsfolgefrequenz bis 5 kHz (Primenenie impul'snykh chastotnykh nanosekundnykh rentgenovskikh apparatov dlya diagnostiki. S. N. Bayankin, I. E. Mozharova, S. R. Korzhenevskiy, V. L. Kuznetsov, A. A. Komarskiy. Vestnik rentgenologii i radiologii, 2015, Nr. 2, S. 42-46).

Bei diesem Verfahren geschieht die Erzeugung der Abbildungen des zu untersuchenden Objekts durch Aufzeichnung der Lichtsumme der durch den Leuchtstoff umgewandelten Röntgenstrahlung in den Pausen zwischen den Impulsen der Röntgenstrahlung.

Der Nachteil dieses Verfahrens liegt in dem erhöhten Rauschniveau der Abbildung bei Verwendung des Röntgenleuchtstoffs CsI:Tl, der in elektronischen Röntgenbilderzeugungsgeräten weit verbreitet ist. Die Dauer des Nachleuchtens herkömmlicher Röntgenleuchtstoffe wie $Gd_2O_5$:Tb, $CaWO_4$, $Y_2O_2S$:Tb, ZnCdS:Ag, LaOBr:Tb beträgt 1 ms (Patent der Russischen Föderation 2420763, G01T 1/20, veröffentlicht 20. Juni 2011). Dabei wird die Leuchtintensität der verstärkenden röntgenlumineszenten Schirme (Kodak lanex, Renex EU-G3, Renex EU-G300, Renex EU-I4), die aus diesen Leuchtstoffen hergestellt sind, auf ein Niveau von 0,1 der Leuchtintensität in dem Moment, wenn die Anregung der Lumineszenz aufhört, innerhalb von 1,0-1,35 ms gesenkt (*Primenenie impul's nykh chastotnykh nanosekundnykh rentgengonvsikh apparatov dlya diagnostiki* (Text)/S. N. Bayankin, I. E. Mozharova, S. R. Korzhenevskiy, V. L. Kuznetsov, A. A. Komarskiy, Vestnik rentgenologii i radiologii 2015, Nr. 2, S. 42-46). Auf diese Weise ermöglicht die Bestrahlung der oben genannten Röntgenleuchtstoffe durch Röntgenstrahlung in Nanosekundenimpulsen in einem Frequenzbereich von 1 kHz bis 5kHz ein Arbeiten in einem Modus des ständigen Leuchtens der Leuchtstoffe, wodurch ein hohes Signal/Rausch-Verhältnis aufrechterhalten wird, was den Erhalt einer qualitativ hochwertigen Abbildung ermöglicht. Gleichzeitig wird die Intensität des Nachleuchtens von CsI:Tl, welches oft bei der Herstellung von Flachbild- und linearen digitalen Röntgenstrahlungsempfängern mit erhöhter Auflösungsfähigkeit verwendet wird, auf ein Niveau von 0,13 der Leuchtintensität in dem Moment, wenn die Anregung der Lumineszenz aufhört, insgesamt innerhalb von 0,1 ms gesenkt (A. A. Meleshko, Vremyarasreshennaya opticheskaya spektroskopiya stsintillyatsionnykh kristallov CsI(Tl): Dissertation zur Erlangung des Grads eines Kandidaten in Physik und Mathematik, Tomsk, Staatliche Bildungseinrichtung für höhere Berufsbildung "Tomskiy politechnicheskiy universitet", 2009). Auf diese Weise ermöglicht die Bestrahlung der Röntgenbilderzeugungsvorrichtungen, die CsI:Tl verwenden, durch Röntgenstrahlung in Nanosekundenimpulsen mit einer Frequenzfolge (weniger als 10 kHz) kein kontinuierliches Leuchten des Leuchtstoffs. Das führt dazu, dass über einen erheblichen Teil der Zeit nicht nur das nutzbare Signal im Moment des Eintreffens der Röntgenimpulse und des Leuchtens des Leuchtstoffs, sondern auch Eigenrauschen und Geräterauschen des Aufzeichnungssystems aufgezeichnet werden. Das wiederum senkt das Signal/Rausch-Verhältnis stark und verringert die Qualität der Abbildung.

Der zu der erfindungsgemäßen Vorrichtung nächstgelegene Stand der Technik ist das Nanosekundenimpuls-Röntgengerät YASEN'-01 (S. R. Korzhenevskiy, Vysokochastotnye nanosekundnye generatory dlya introskopii i selektivnogo rasrusheniya tverdykh tel mikronnykh rasmerov: Dissertation zur Erlangung des Grads eines Kandidaten der technischen Wissenschaften, Ekaterinburg, Institut elektrofisiki, Abteilung Ural der Russischen Akademie der Wissenschaften, 2008), das Röntgenstrahlungsimpulse mit einer Frequenzfolge bis 5 kHz mit Hilfe einer Explosionsemissions-Röntgenröhre und eines mit induktivem Energiespeicher und Halbleiterschalter versehenen Hochspannungs-Nanosekundenimpulsgenerators bildet, der Hochspannungsimpulse mit einer Spitzenstärke in einem Elektronenbündel bis 10 MW bildet. Zur Aufzeichnung wird ein fotografischer Strahlungsempfänger verwendet.

Kurzer Abriss der Erfindung

Die Erfindung unterscheidet sich von dem nächstgelegenen Stand der Technik durch die Konstruktion der Explosionsemissions-Röntgenröhre, was es ermöglicht, sowohl die Spitzenstärke des Impulses zu erhöhen, der die Röntgenstrahlung in dem Elektronenbündel um das 3,5-fache auf 35 MW anregt, als auch die Impulsfolgefrequenz der Röntgenstrahlung um das 3-fache auf 15 kHz zu erhöhen. Diese charakteristischen Besonderheiten ermöglichen das Erzielen einer Pausendauer zwischen den Strahlungsimpulsen, die nicht länger als die Dauer der Reduzierung der Intensität der langsamen Komponente des Nachleuchtens eines beliebigen Röntgenleuchtstoffs ist, einschließlich CsI:Tl, bis zu einem Niveau von nicht weniger als 0,1 der Leuchtintensität in dem Moment, wenn die Anregung der Lumineszenz aufhört, sowie durch die Anregung des Leuchtens der Röntgenleuchtstoffe in einem Modus der nichtlinearen Erhöhung der Quantenausbeute und der nichtlinearen Erhöhung der Spitzenintensität des Leuchtens der Leuchtstoffe gegenüber der Intensität der Röntgenstrahlung.

Das technische Ergebnis der Erfindung liegt in der Erzielung eines qualitativ hochwertigen Röntgenbilds unter Beibehaltung des vorherbestimmten Signal/Rausch-Verhältnisses und in der Verringerung der Röntgenstrahlungsdosis, die zur Erzielung dieses Bilds erforderlich ist, durch eine nichtlineare Erhöhung der Quantenausbeute und eine nichtlineare Erhöhung der Spitzenintensität des Leuchtens der Röntgenleuchtstoffe gegenüber der Intensität der Röntgenstrahlung bei beliebigen Arten der Introskopie unter Verwendung von Röntgenbilderzeugungsvorrichtungen, die sowohl in einem Modus der Röntgenografie als auch der Röntgenoskopie funktionieren und Röntgenleuchtstoffe mit einer Länge des Nachleuchtens ab 0,1 ms verwenden, was als Dauer der Verringerung der Intensität des Nachleuchtens des Röntgenleuchtstoffs bis zu einem Niveau von 0,1 der Leuchtintensität in dem Moment, wenn die Anregung der Lumineszenz aufhört, definiert ist.

Der Kern des Verfahrens liegt darin, dass Röntgenleuchtstoffe von Röntgenbilderzeugungsvorrichtungen mit einem Paket von Röntgenstrahlungsimpulsen von Nanosekundendauer bestrahlt werden, die durch Hochspannungsimpulse von Nanosekundendauer mit einer Spitzenstärke von mehr als 30 MW in einem Elektronenbündel angeregt werden, mit Kilohertz-Impulsfolgefrequenzen, wobei die Dauer der Anregung der Lumineszenz, die die Dauer des Röntgenstrahlungsimpulses bestimmt, um mehr als das 10-fache niedriger ist als die Dauer des Nachleuchtens des Röntgenleuchtstoffs bei Beendigung der Wirkung der Röntgenstrahlung, während die Bilderzeugung durch Aufzeichnung sowohl der durch den Röntgenleuchtstoff umgewandelten Röntgenstrahlung während der Zeit der Wirkung der Röntgenstrahlung als auch der Lichtsumme der durch den Röntgenleuchtstoff umgewandelten Röntgenstrahlung in den Pausen zwischen den Röntgenstrahlungsimpulsen durchgeführt wird. Im Unterschied zum nächstgelegenen Stand der Technik führt die Erzeugung von Röntgenstrahlungsimpulsen, die durch Hochspannungsimpulse von Nanosekundendauer mit einer Spitzenleistung von mehr als 30 MW in einem Elektronenbündel angeregt werden, zu einer nichtlinearen Erhöhung der Quantenausbeute und einer Spitzenintensität des Leuchtens der Röntgenleuchtstoffe gegenüber der Intensität der Röntgenstrahlung, was eine Verringerung der Dosis ermöglicht, die zur Erzielung der erforderlichen Lichtsumme der durch den Leuchtstoff umgewandelten Röntgenstrahlung zur Erzielung eines qualitativ hochwertigen Röntgenbildes mit hohem Signal/Rausch-Verhältnis erforderlich ist, während die Impulsfolgefrequenz von mehr als 10 kHz das Erzielen eines qualitativ hochwertigen Röntgenbildes mit Röntgenbilderzeugungsvorrichtungen ermöglicht, die Röntgenleuchtstoffe mit einer Dauer des Nachleuchtens ab 0,1 ms verwenden, einschließlich des bei digitalen Strahlungsempfängern weit verbreiteten CsI:Tl, wobei die Impulsfolgefrequenz entsprechend den Bedingungen ausgewählt wird, die ermöglichen, dass die Dauer der Pause zwischen den Impulsen nicht länger als die Dauer der Reduzierung der Intensität der langsamen Komponente des Nachleuchtens des verwendeten Röntgenleuchtstoffs bis zu einem Niveau von nicht weniger als 0,1 der Leuchtintensität in dem Moment, wenn die Anregung der Lumineszenz aufhört, ist.

Das Verfahren wird in einer Vorrichtung verwirklicht, die einen Generator für Hochspannungs-Nanosekundenimpulse mit einem induktiven Energiespeicher und einem Hochspannungs-Halbleiter-Stromunterbrecher, eine Explosionsemissions-Röntgenröhre mit Gasabsorptionselementen (Gettern), die unmittelbar an der Kathode, der Anode oder gleichzeitig an beiden Elektroden in einem Abstand von nicht mehr als 20 mm von dem Elektroden-Zwischenraum angeordnet sind, wobei die Explosionsemissions-Röntgenröhre Röntgenstrahlungsimpulse erzeugt, die durch Hochspannungsimpulse von Nanosekundendauer mit einer Spitzenleistung von 35 MW in einem Elektronenbündel mit einer Pulsfolgefrequenz bis 15 kHz angeregt werden, sowie ein Röntgenbilderzeugungssystem umfasst, das den Röntgenleuchtstoff umfasst. Die Impulsfolgefrequenz wird unter Berücksichtigung der Dauer der Reduzierung der Intensität des Nachleuchtens des verwendeten Röntgenleuchtstoffs bis zu einem Niveau von nicht weniger als 0,1 der Leuchtintensität in dem Moment, wenn die Anregung der Lumineszenz aufhört, bestimmt. So erreicht bei einer Verwendung von $Gd_2O_5$:Tb, $CaWO_4$ die Impulsfolgefrequenz 4 kHz, während bei einer Verwendung von CsI:Tl die Impulsfolgefrequenz von 15 kHz gewählt wird.

Kurze Beschreibung der Zeichnungen

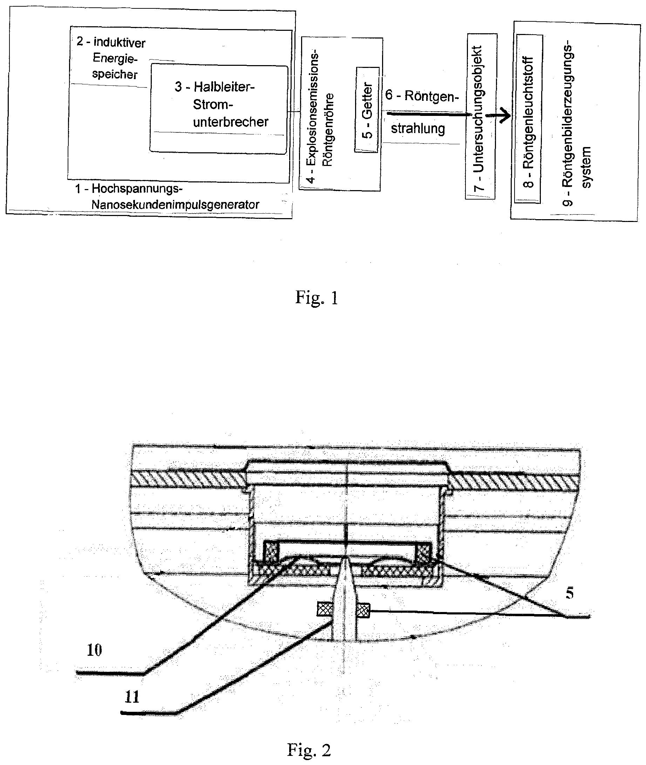

Fig. 1 zeigt schematisch die erfindungsgemäße Vorrichtung, worin: 1 der Generator der Hochspannungs-Nanosekundenimpulse ist; 2 der induktive Energiespeicher ist; 3 der Halbleiter-Stromunterbrecher ist; 4 die Explosionsemissions-Röntgenröhre ist; 5 die Getter (die gasabsorbierenden Elemente) sind; 6 die Röntgenstrahlung ist; 7 das Untersuchungsobjekt ist; 8 der Röntgenleuchtstoff ist; 9 das Röntgenbilderzeugungssystem ist.

Fig. 2 zeigt die Elektrodenbaugruppe der Explosionsemissions-Röntgenröhre der erfindungsgemäßen Vorrichtung, worin 5 die Getter (die gasabsorbierenden Elemente) sind; 10 die Kathode ist; 11 die Anode ist.

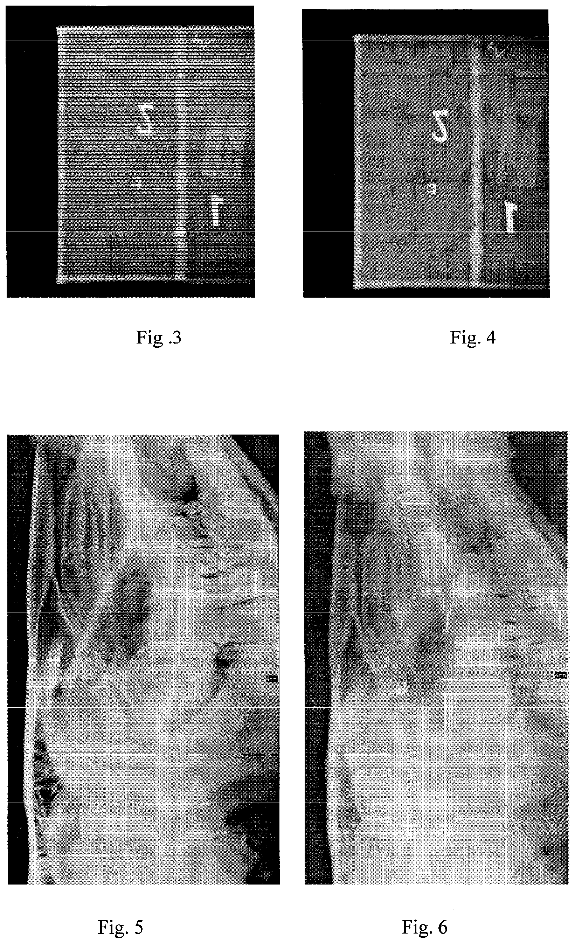

Fig. 3 zeigt eine Abbildung einer Schweißnaht von Stahlteilen, die unter Verwendung von Röntgenimpulsgeneratoren mit kapazitivem und induktivem Energiespeicher erhalten wurde, die mit einer Frequenz von 10 Hz und unter Verwendung des Flachbilddetektors PerkinElmer Dexela 1512NDT mit dem Röntgenleuchtstoff $Gd_2O_5$:Tb arbeiten.

Fig. 4 zeigt eine Abbildung einer Schweißnaht von Stahlteilen, die unter Verwendung von Röntgenimpulsgeneratoren mit kapazitivem und induktivem Energiespeicher erhalten wurde, die mit einer Frequenz von 4 kHz und unter Verwendung des Flachbilddetektors PerkinElmer Dexela 1512NDT mit dem Röntgenleuchtstoff $Gd_2O_5$:Tb arbeiten.

Fig. 5 zeigt eine Abbildung eines biologischen Objekts, die unter Verwendung eines Röntgenimpulsgenerators mit induktivem Energiespeicher erhalten wurde, der mit einer Frequenz von 4 kHz und unter Verwendung des Flachbilddetektors PerkinElmer XRpad 4343F mit dem Röntgenleuchtstoff CsI:Tl arbeitet.

Fig. 6 zeigt eine Abbildung eines biologischen Objekts, die unter Verwendung eines Röntgenimpulsgenerators mit induktivem Energiespeicher erhalten wurde, der mit einer Frequenz von 15 kHz und unter Verwendung des Flachbilddetektors PerkinElmer XRpad 4343F mit dem Röntgenleuchtstoff CsI:Tl arbeitet.

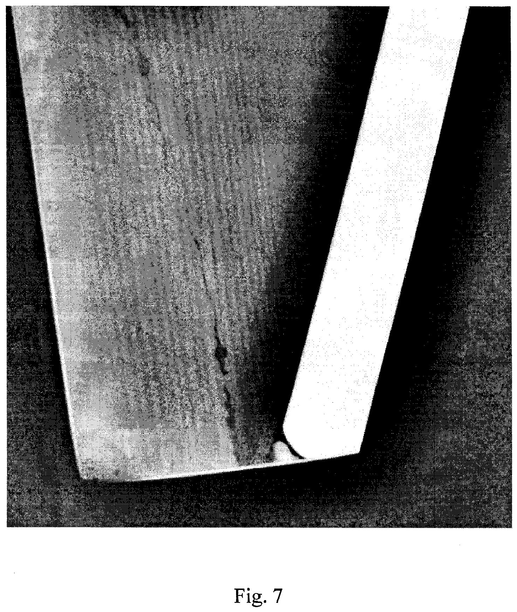

Fig. 7 zeigt eine Abbildung eines Defekts eines Teils aus Verbundmaterial, die unter Verwendung eines Röntgenimpulsgenerators mit induktivem Energiespeicher mit einer Spitzenleistung von 35 MW erhalten wurde, der mit einer Frequenz von 4 kHz unter Verwendung des Flachbilddetektors Carestream DRX-1 mit dem Röntgenleuchtstoff $Gd_2O_5$:Tb arbeitet.

Ausführung der Erfindung

Es ist bekannt, dass die Röntgenlumineszenz der meisten Materialien aus zwei Komponenten besteht: einer schnellen (im zweistelligen Nanosekundenbereich) und einer langsamen (im zwei- bis dreistelligen Mikrosekundenbereich). Dabei wird bei der Herstellung von Szintillationsdosimetern die schnelle Komponente genutzt, während bei der Herstellung von Röntgenbilderzeugungsvorrichtungen die langsame genutzt wird, die ungefähr 80% der Strahlungsenergie trägt.

Die Besonderheit der Anregung der Leuchtstoffe durch Röntgenstrahlung liegt darin, dass das Leuchten der Leuchtstoffe nicht durch die unmittelbare Wirkung der Röntgenphotonen selbst, sondern durch die Wirkung der Elektronen hervorgerufen wird, die von den Basisatomen oder -ionen des Leuchtstoffs durch Röntgenstrahlen abgelöst werden. Infolgedessen hat die Röntgenlumineszenz viele Gemeinsamkeiten mit der Kathodenlumineszenz. Es wurde experimentell nachgewiesen, dass die Bestrahlung der Leuchtstoffe mit starken Nanosekundenimpulsen mit einer Stromdichte von 100-1000 A/cm$^2$ eine Lumineszenz hervorruft, deren Spitzenintensität um einen Faktor $10^4$ bis $10^6$ höher ist als die Intensität herkömmlicher stationärer Lumineszenz (V. I. Solomonov, Impul'snaya katodolyuminestsentsiya kondensirovannykh sred: Dissertation zur Erlangung des Doktorgrads in Physik und Mathematik, Ekaterinburg, Institut für Elektrophysik, Abteilung Ural der Russischen Akademie der Wissenschaften, 1996) Ein ähnlicher Effekt wird bei der Bestrahlung von Röntgenleuchtstoffen mit starken Nanosekundenimpulsen von Röntgenstrahlen beobachtet, die durch Hochspannungsimpulse von Nanosekundendauer mit einer Spitzenstärke von mehr als 30 MW in einem Elektronenbündel hervorgerufen werden, wenn beim Erhalt der Abbildung eine Qualität erforderlich ist, bei der Röntgenbilderzeugungsgeräte mit Röntgenleuchtstoffschichten (-schirmen) verwendet werden, wird eine Verringerung der Dosis in der Eingangsebene der Aufnahmevorrichtung um ein Vielfaches beobachtet, was nicht durch Ungenauigkeit der durchgeführten dosimetrischen Messungen erklärt werden kann.

Eine Erklärung dieses Effekts nur dadurch, dass der Strahlungsempfänger die Lichtsumme der durch den Leuchtstoff umgewandelten Röntgenstrahlung speichert, während ein großer Unterschied in der Dauer des Nanosekundenimpulses der Röntgenstrahlung und dem Mikrosekundenabfall des Nachleuchtens des Leuchtstoffs eine Senkung der Dosis um ein Mehrfaches bei der Nutzung von Frequenzimpulsgeräten anstelle von Gleichstromgeräten ermöglicht (*Analis printsipov raboty impul'snykh rentgenovskikh apparatov.* [Text]/I. E. Mozharova, S. R. Korzhenevskiy, V. L. Kusnetsov // Meditsinskiy biznes, 2012, Nr. 12, S. 40-42), ist nicht ausreichend, da die Lichtsumme der durch den Leuchtstoff umgewandelten Röntgenstrahlung bei Beendigung der Anregung der Lumineszenz die gespeicherte, aber während der Einwirkung der Röntgenstrahlung nicht von dem Leuchtstoff bestrahlte Energie abregt, und es keine weitere absorbierte Energie des Röntgenimpulses unter Berücksichtigung des Koeffizienten des energetischen Wirkungsgrads geben kann. Gleichzeitig ist bekannt, dass die Natur der Entstehung der Röntgenlumineszenz ähnlich der Kathodenlumineszenz ist. Folglich können Effekte, die bei der Erforschung der Kathodenimpulslumineszenz unter Einwirkung starker Stromimpulse von Nanosekundendauer beobachtet werden, auch bei Röntgenimpulslumineszenz bei einer Bestrahlung mit starker Röntgenstrahlung stattfinden, was auch experimentell nachgewiesen wurde. Der entscheidende Faktor des nichtlinearen Anstiegs der Spitzenintensität des Leuchtens der Röntgenleuchtstoffe ist die Wirkung der Röntgenimpulsstrahlung, die durch Hochspannungsimpulse von Nanosekundendauer mit einer Spitzenleistung von mehr als 30 MW in einem Elektronenbündel hervorgerufen wird, auf diese.

Außerdem bewirkt die Bombardierung der Anode der Röntgenröhre mit einem Elektronenbündel von Megawatt-Spitzenleistung bei dem Vorgang der Erzeugung von Röntgenstrahlung eine intensive Erhitzung des Anodenmaterials, und folglich eine Verdampfung des Anodenmaterials in den Elektroden-Zwischenraum. Die Metalldämpfe wiederum werden unter Einwirkung der hohen Spannung ionisiert, es entsteht Plasma, dies kann dazu führen, dass der Elektroden-Zwischenraum mit Plasma verschlossen wird, was die Funktion der Röhre stört, einen Abbruch der Erzeugung der Röntgenstrahlung verursacht und sogar die Röntgenröhre unbrauchbar machen kann. Um dies zu vermeiden, sind bei der Herstellung der Röhren gasabsorbierende Elemente in dem Innenraum der Röhre vorgesehen, während auch die erreichbare Spitzenleistung und die Impulsfolgefrequenz im Betrieb des Erzeugnisses gesenkt werden. Bei dem untersuchten nächstgelegenen Stand der Technik wird eine Röhre verwendet, die ebenfalls gasabsorbierende Elemente aufweist (Patent der Russischen Föderation 2174726, internationale Patentklassifizierung H 01 J 35/00, H 05 G 1/02, veröffentlicht 10. Oktober 2001), jedoch sind diese Elemente in einer Zone angeordnet, die um einen Abstand von 80 mm von dem Elektroden-Zwischenraum entfernt ist, und sind an der Basis eines massiven Anodenflanschs befestigt, der eine große Berührungsfläche mit dem Transformatoröl des Hochspannungsblocks einnimmt, daher kann davon ausgegangen werden, dass die Temperatur der gasabsorbierenden Elemente sich der Umgebungstemperatur angleicht. Gleichzeitig ist bekannt, dass sich die Wirksamkeit der Gasabsorption durch Getter mit Ansteigen der Temperatur erhöht. Auf diese Weise verringert eine solche Anordnung der gasabsorbierenden Elemente die Wirksamkeit der Gasabsorption der angeordneten Getter, da ihre Temperatur gleich der Umgebungstemperatur ist, während Heizelemente, die die Temperatur der Getter erhöhen, bei der Konstruktion der Röhre nicht vorgesehen sind. Das führt dazu, dass bei dem nächstgelegenen Stand der Technik die maximal zulässige Spitzenleistung in dem Elektronenbündel durch den Wert von 10 MW begrenzt ist, während die Impulsfolgefrequenz 5 kHz nicht überschreitet, was eine Funktion der Anode in einem optimalen Temperaturbereich ermöglicht, die Verdampfung von Anodenmaterial verringert, und folglich eine Entfernung des Plasmas aus dem Elektroden-Zwischenraum in den Pausen zwischen den Impulsen ermöglicht. Folglich sind für die Anwendung dieses Verfahrens zur Bestrahlung von Röntgenbilderzeugungsvorrichtungen, die Röntgenleuchtstoffe mit einer Dauer des Nachleuchtens auf einem Niveau von 0,1 ms verwenden, beispielsweise CsI:Tl, mit einer Impulsfolgefrequenz von mehr als 10 kHz, Röntgengeräte mit einer explosionsemittierenden Röntgenröhre, die gasabsorbierende Elemente in einem Entfernungsbereich von 80 mm von dem Elektroden-Zwischenraum umfasst, nicht geeignet.

Die praktische Ausführung dieses Verfahrens zur Bestrahlung von Röntgenleuchtstoffen ist nur mit Hilfe von Nanosekunden-Frequenz-Impuls-Röntgengeräten möglich, die einen Generator für Hochspannungs-Nanosekunden-Impulse 1 mit einem induktiven Energiespeicher 2, einem Hochspannungs-Halbleiter-Stromwandler 3 und einer Explosionsemissions-Röntgenröhre 4, die gasabsorbierende Elemente 5 in einem Abstand von nicht mehr als 20 mm von dem Elektroden-Zwischenraum zwischen der Kathode 10 und der Anode 11 umfasst. Da mehr als 90% der Energie des Elektronenbündels in Wärmeenergie umgewandelt werden, die die Elektroden erhitzt, führt eine Anordnung der Getter 5 in einem solchen Abstand von dem Elektroden-Zwischenraum und ihre Befestigung unmittelbar an den Elektroden zu einer Erhitzung der gasabsorbierenden Elemente im Betrieb der Röhre, und führt folglich zu einer effektiveren Absorption der Dämpfe des Elektrodenmaterials durch den Getter. Dabei führt die Erhöhung der Spitzenleistung des Elektronenbündels, das von der Explosionsemissionskathode emittiert wird und die Anode der Röhre bombardiert, zu einer Erhöhung der Temperatur des Getters und einer effektiveren Gasabsorption.

Als Ergebnis funktioniert der Generator der erfindungsgemäßen Vorrichtung wie folgt.

Beim Anschließen des Generators für Hochspannungs-Nanosekundenimpulse 1 an das Stromnetz geschieht eine Energiespeicherung des Magnetfelds in dem induktiven Speicher 2. Weiterhin geschieht mit Hilfe des Hochspannungs-Halbleiterwandlers 3 eine Umwandlung der Energie des Magnetfelds in die Energie eines elektrischen Felds, was zur Erzeugung eines Nanosekundenimpulses mit hoher Spannung führt. Dieser Impuls wird an die Explosionsemissions-Röntgenröhre 4 angelegt, die an den Generator für Hochspannungs-Nanosekundenimpulse 1 angeschlossen ist, was zu einem Explosionsemissionsprozess der Elektronen von der Kathode 10 und einer Bombardierung der Anode 11 mit einem Elektronenbündel mit einer Spitzenleistung von 35 MW führt. Das Ergebnis des Bremsens der Elektronen, mit denen sie bombardiert wird, durch die Anode erzeugt Röntgenstrahlung 6. Die Impulsfolgefrequenz der Röntgenstrahlung im Paket wird durch die Dauer der Verringerung der Intensität der langsamen Komponente des Nachleuchtens des Röntgenleuchtstoffs 8 auf ein Niveau von nicht weniger als 0,1 der Leuchtintensität in dem Moment, wenn die Anregung der Lumineszenz aufhört, bestimmt. Die Röntgenstrahlung 6 bestrahlt nach Durchdringung des Untersuchungsobjekts 7 den Röntgenleuchtstoff 8 der Röntgenbilderzeugungsvorrichtung 9. Das führt zur Ausbildung eines Bilds des Untersuchungsobjekts durch die Röntgenbilderzeugungsvorrichtung 9 mittels einer Aufzeichnung sowohl der durch den Röntgenleuchtstoff 8 umgewandelten Röntgenstrahlung während der unmittelbaren Einwirkung der Röntgenstrahlung 6 als auch der Lichtsumme der durch den Röntgenleuchtstoff 8 umgewandelten Röntgenstrahlung 6 in den Pausen zwischen den Röntgenstrahlungsimpulsen. Durch die Verwendung von Hochspannungsimpulsen von Nanosekundendauer mit einer Spitzenleistung von mehr als 30 MW in dem Elektronenbündel zum Erzielen der Röntgenstrahlung wird dabei eine nichtlineare Erhöhung der Quantenausbeute und eine nichtlineare Erhöhung der Spitzenintensität des Leuchtens des Röntgenleuchtstoffs 8 gegenüber der Intensität der Röntgenstrahlung 6 beobachtet, was zu einer Verringerung der Röntgenstrahlungsdosis führt, die für einen Erhalt eines Bilds der geforderten Qualität erforderlich ist. Die Anordnung der gasabsorbierenden Elemente in einem Abstand von nicht mehr als 20 mm von dem Elektrodenzwischenraum führt zu einer Erhöhung der Temperatur der Getter gegenüber den Elektroden, die beim Emissionsvorgang des Elektronenbündels und der Erzeugung der Röntgenstrahlung erwärmt werden, was dementsprechend die Absorption der Dämpfe der Elektrodenmaterialien effektiver macht. Das ermöglicht die Erzeugung eines Pakets von Röntgenstrahlungsimpulsen mit einer Frequenzfolge.

Beispiel 1: Die erfindungsgemäße Impuls-Anlage mit einer Spitzenleistung von 35 MW in einem Elektronenbündel, eine Impulsfolgefrequenz von 4 kHz und eine Gleichstromanlage Definium AMX 700, die Röntgenimpulse bis 15 kHz verwendet, was eine Dauer der Pause zwischen den Impulsen ermöglicht, die nicht länger als die Dauer der Verringerung der Intensität des Nachleuchtens des Röntgenleuchtstoffs bis zu einem Niveau von nicht weniger als 0,1 der Leuchtintensität in dem Moment, wenn die Anregung der Lumineszenz aufhört, dauert, was das Signal-RauschVerhältnis und die Qualität der Darstellung erhöht. Die Röhre mit der Wärmeemissionskathode mit einer Spitzenleistung in dem Elektronenbündel von 12,5 kW wird zur Untersuchung der Organe des Brustkorbs verwendet. Die Aufzeichnung des Bilds wird mit Hilfe eines Flachbilddetektors Carestream DRX-1 durchgeführt (Fotodiodenmatrix aus amorphem Silizium und mit Röntgenleuchtstoff $Gd_2O_5$:Tb). Der Vergleich der diagnostischen Systeme wird anhand einer subjektiven Beurteilung der Qualität der erhaltenen diagnostischen Aufnahmen der Organe des Brustkorbs sowie anhand der gemessenen äquivalenten Dosen vorgenommen. Für die dosimetrischen Messungen wird ein Dosimeter "DKS-AT 1123" mit breitem Abstimmungsbereich verwendet. Die äquivalente Dosis ist bei Verwendung der erfindungsgemäßen Anlage gleich 0,027 μSv, bei Verwendung einer Anlage mit Wärmeemissions-Röntgenröhre 0,569 μSv. Auf diese Weise haben die im Zuge der Untersuchung durchgeführten dosimetrischen Messungen bestätigt, dass die Verwendung von Impuls-Röntgengeräten, die ein Paket von Nanosekunden-Röntgenimpulsen bilden, die mit Hilfe von Hochspannungs-Impulsen von Nanosekundendauer und mit einer Megawatt-Spitzenleistung in einem Elektronenbündel gebildet werden, zu einer Reduzierung der Dosislast für den Patienten führen, im Vergleich zu Gleichstrom-Komplexen mit einer Spitzenleistung im Kilowattbereich in einem Elektronenbündel, um mehr als eine Größenordnung, was einen Fehler bei den Dosismessungen um ein Vielfaches übersteigt und nicht durch eine Unsicherheit bei den durchgeführten Messungen zu erklären ist.

Beispiel 2: Die erfindungsgemäße Impuls-Anlage mit einem induktiven Energiespeicher, einem Festkörpersystem zur Impulserzeugung, die Impulsfolgefrequenz beträgt 4 kHz und die Impuls-Anlage ist eine ARINA-3 mit einem kapazitiven Energiespeicher und einem Hochspannungs-Gas-Entladungsgefäß-Anschärfmittel, die Impulsfolgefrequenz beträgt 10 kHz. Beide Anlagen arbeiten im Megawattbereich mit einer Spitzenleistung des Elektronenbündels. Strahlungsempfänger: Flachbilddetektor PerkinElmer Dexela 1512NDT mit dem Röntgenleuchtstoff $Gd_2O_5$:Tb. Der Vergleich der Systeme wird anhand einer subjektiven Beurteilung der Qualität der erhaltenen diagnostischen Aufnahmen einer Schweißnaht eines Stahlrohrs mit einer Wanddicke von 16,5 mm durchgeführt, mit einer Einzeldosis in der Ebene des Eingangsfensters der Röntgenbilderzeugungsvorrichtung. Das Bild, das mit Hilfe der erfindungsgemäßen Anlage erzielt wurde, erfüllt alle Anforderungen der Dokumentationsnormen radiografischer Kontrollmechanismen. Das Bild, das mit Hilfe der Anlage erzielt wurde, die mit einer Frequenz von 10 Hz arbeitet (Fig. 3), zeichnet sich durch einen geringeren Kontrast und das Vorhandensein einer Folge von schwarzen Streifen aus, die 20% des Bildsichtfelds einnehmen, und ist als ungeeignet für die Durchführung einer Defekterkennung anzusehen.

Beispiel 3: Die erfindungsgemäße Impuls-Anlage mit einem induktiven Energiespeicher und einem Festkörpersystem zur Impulserzeugung. Die Impulsfolgefrequenz wird schrittweise von 4 kHz bis 15 kHz geändert. Strahlungsempfänger: Flachbilddetektor PerkinElmer XRpad 4343F mit Röntgenleuchtstoff CsI:Tl. Die Dosis in der Empfängerebene wird durch ein Dosimeter "DKS-AT 1123" mit breitem Abstimmungsbereich gesteuert. Vergleichsaufnahmen des biologischen Objekts werden mit einer einmaligen Dosis in der Ebene des Eingangsfensters der Röntgenbilderzeugungsvorrichtung durchgeführt. Das Bild, das bei einem Betrieb der Anlage mit einer Frequenz von 4 kHz erzielt wird, zeichnet sich durch einen geringeren Kontrast, ein erhöhtes Rauschniveau und einen geringeren diagnostischen Wert im Vergleich zu dem Bild, das mit einer Impulsfolgefrequenz von 15 kHz erzielt wird (Fig. 5), aus.

Beispiel 4: Die erfindungsgemäße Impuls-Anlage mit einer Spitzenleistung von 35 MW in einem Elektronenbündel und eine Anlage YASEN'-01 (nächstgelegener Stand der Technik) mit einer Spitzenleistung von 10 MW in einem Elektronenbündel werden zur Erzielung eines Bilds eines Defekts eines Bauteils aus Verbundmaterial verwendet, die Qualität der Aufnahme wurde subjektiv von drei Fachleuten für Defekterkennung jeweils unabhängig voneinander beurteilt. Die Impulsfolgefrequenz für beide Anlagen wurde gleich gewählt und betrug 4 kHz. Die Aufzeichnung des Bildes wird mit Hilfe eines Flachbilddetektors Carestream DRX-1 durchgeführt (Fotodiodenmatrix aus amorphem Silizium und mit Röntgenleuchtstoff $Gd_2O_5$:Tb). Für die dosimetrischen Messungen wurde ein Dosimeter "DKS-AT 1123" mit breitem Abstimmungsbereich verwendet. Die Dosis bei Verwendung der erfindungsgemäßen Anlage mit einer Spitzenleistung von 35 MW in einem Elektronenbündel beträgt 0,006 $\mu$Gy, während bei der Verwendung der Anlage mit einer Spitzenleistung von 10 MW in einem Elektronenbündel die Dosis gleich 0,01 $\mu$Gy ist. Somit bestätigen die dosimetrischen Messungen, die im Laufe der Untersuchung durchgeführt wurden, dass die Erhöhung der Spitzenleistung von Impuls-Röntgengeräten zu einer Verringerung der Dosis führt, die zum Erzielen eines Bilds von vergleichbarer Qualität erforderlich ist (Fig. 7).

## Patentansprüche

1. Verfahren zum Bestrahlen von Röntgenleuchtstoffen von Röntgenbilderzeugungsvorrichtungen mit einem Paket von Röntgenstrahlungsimpulsen von Nanosekundendauer, wobei die Erzeugung des Bilds durch die Röntgenbilderzeugungsvorrichtung durch Aufzeichnung sowohl der durch den Röntgenleuchtstoff umgewandelten Röntgenstrahlung unmittelbar während der Wirkung der Röntgenstrahlung als auch der Lichtsumme der durch den Röntgenleuchtstoff umgewandelten Röntgenstrahlung in den Pausen zwischen den Röntgenstrahlungsimpulsen erfolgt, **dadurch gekennzeichnet, dass** für die Erzeugung der Röntgenstrahlung Hochspannungsimpulse von Nanosekundendauer verwendet werden, mit einer Spitzenleistung von mehr als 30 MW in einem Elektronenbündel, mit einer Impulsfolgefrequenz bis 15 kHz, wobei die Impulsfolgefrequenz unter Berücksichtigung der Dauer des Abklingens des verwendeten Röntgenleuchtstoffs bestimmt wird, wobei die Dauer der Pause zwischen den Impulsen nicht länger ist als die Dauer der Verringerung der Intensität des Nachleuchtens des Röntgenleuchtstoffs bis zu einem Niveau von nicht weniger als 0,1 der Leuchtintensität in dem Moment, wenn die Anregung der Lumineszenz aufhört.

2. Vorrichtung zur Durchführung des Verfahrens nach Anspruch 1, umfassend einen Generator für die Hochspannungs-Nanosekundenimpulse, einen induktiven Energiespeicher, einen Hochspannungs-Halbleiter-Stromunterbrecher, eine Explosionsemissions-Röntgenröhre und ein Röntgenbilderzeugungssystem, das einen Röntgenleuchtstoff umfasst, **dadurch gekennzeichnet, dass** die Explosionsemissions-Röntgenröhre gasabsorbierende Elemente umfasst, die in einem Abstand von nicht mehr als 20 mm von einem Elektrodenzwischenraum angeordnet sind.

Fig. 1

Fig. 2

Fig .3

Fig. 4

Fig. 5

Fig. 6

Fig. 7

## INTERNATIONAL SEARCH REPORT

International application No.

PCT/RU 2017/000384

### A. CLASSIFICATION OF SUBJECT MATTER

G01N 23/223 (2006.01)

According to International Patent Classification (IPC) or to both national classification and IPC

### B. FIELDS SEARCHED

Minimum documentation searched (classification system followed by classification symbols)

G01N 23/00-23/04, 23/22, 23/221, 23/223, G01T 1/00, 1/16, 1/20, 1/202, A61B 6/00

Documentation searched other than minimum documentation to the extent that such documents are included in the fields searched

Electronic data base consulted during the international search (name of data base and, where practicable, search terms used)

PatSearch (RUPTO internal), USPTO, PAJ, Esp@cenet, DWPI, EAPATIS, PATENTSCOPE, Information Retrieval System of FIPS

### C. DOCUMENTS CONSIDERED TO BE RELEVANT

| Category* | Citation of document, with indication, where appropriate, of the relevant passages | Relevant to claim No. |
|---|---|---|
| A, D | Baiankin S.N. et al. Primenenie impulsnykh chastotnykh nanosekundnykh rentgenovskikh apparatov dlia diagnostiki. Vestnik rentgenologii i radiologii, 2015, N 2, p. 42-46 | 1-2 |
| A | Korzhenevskii S.R. Vysokochastotnye nanosekundnye generatory dlia introskopii i selektivnogo razrusheniia tverdykh tel mikronnykh razmerov, Avtoreferat dissertatsii na soiskanie uchenoi stepeni kandidata tekhnicheskikh nauk, Ekaterinburg, Institut elektrofiziki UrO RAN, 2008, p. 9, 12, 16, 17 | 1-2 |
| A | RU 2206886 C2 (FEDERALNOE GOSUDARSTVENNOE UNITARNOE PREDPRIIATIE VOSTOCHNO-SIBIRSKAIA ZHELEZNAIA DOROGA MPS) 20.06.2003 | 1-2 |
| A, D | RU 2153848 C2 (INSTITUT ELEKTROFIZIKI URALSKOGO OTDELENIIA RAN) 10.08.2000 | 1-2 |
| A | US 4274536 A (VOEST-ALPINE AKTIENGESSELSCHAFT) 23.06.1981 | 1-2 |

[X] Further documents are listed in the continuation of Box C.  [ ] See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 07 November 2017 (07.11.2017) | 16 November 2017 (16.11.2017) |

| Name and mailing address of the ISA/ | Authorized officer |
|---|---|
| | |
| Facsimile No. | Telephone No. |

Form PCT/ISA/210 (second sheet) (April 2005)

**INTERNATIONAL SEARCH REPORT**

| International application No. |
|---|
| PCT/RU 2017/000384 |

C (Continuation).    DOCUMENTS CONSIDERED TO BE RELEVANT

| Category* | Citation of document, with indication, where appropriate, of the relevant passages | Relevant to claim No. |
|---|---|---|
| A | CN 103122484 A (NORTH CHINA ELECTRIC POWER UNIVERSITY) 29.05.2013 | 1-2 |

Form PCT/ISA/210 (continuation of second sheet) (April 2005)

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **O. N. KAZANKIN ; L. YA. MARKOVSKIY ; I. A. MIRONOV ; F. M. PEKERMAN ; L. N. PETROSHI-NA.** Neorganicheskiye lyuminofory. Chimiya-Verlag, 1975
- Impul'snaya katodolyuminestsentsiya kondensirovannykh sred. **V. I. SOLOMONOV.** Dissertation zur Erlangung des Doktorgrads in Physik und Mathematik, Ekaterinburg. Abteilung Ural der Russischen Akademie der Wissenschaften, 1996, 267
- **S. N. BAYANKIN ; I. E. MOZHAROVA ; S. R. KORZHENEVSKIY ; V. L. KUZNETSOV ; A. A. KOMARSKIY.** Primenenie impul'snykh chastotnykh nanosekundnykh rentgenovskikh apparatov dlya diagnostiki. *Vestnik rentgenologii i radiologii,* 2015, vol. 2, 42-46
- **S. N. BAYANKIN ; I. E. MOZHAROVA ; S. R. KORZHENEVSKIY ; V. L. KUZNETSOV ; A. A. KOMARSKIY.** *Vestnik rentgenologii i radiologii,* 2015, vol. 2, 42-46
- Vremya-rasreshennaya opticheskaya spektroskopiya stsintillyatsionnykh kristallov CsI(Tl). **A. A. MELESHKO.** Dissertation zur Erlangung des Grads eines Kandidaten in Physik und Mathematik, Tomsk, Staatliche Bildungseinrichtung für höhere Berufsbildung. Tomskiy politechnicheskiy universitet, 2009
- Vysokochastotnye nanosekundnye generatory dlya introskopii i selektivnogo rasrusheniya tverdykh tel mikronnykh rasmerov. **S. R. KORZHENEVSKIY.** Dissertation zur Erlangung des Grads eines Kandidaten der technischen Wissenschaften. Institut elektrofisiki, 2008
- Impul'snaya katodolyuminestsentsiya kondensirovannykh sred. **V. I. SOLOMONOV.** Dissertation zur Erlangung des Doktorgrads in Physik und Mathematik. Institut für Elektrophysik, 1996
- **I. E. MOZHAROVA ; S. R. KORZHENEVSKIY ; V. L. KUSNETSOV.** *Meditsinskiy biznes,* 2012, vol. 12, 40-42